# EUROPÄISCHE PATENTANMELDUNG

(11) **EP 3 702 219 A1**
(43) Veröffentlichungstag der Anmeldung: **02.09.2020**
(21) Anmeldenummer: 19159659.2
(22) Anmeldetag: 27.02.2019
(51) Int. Cl.: B60R 16/02, H02G 5/00

(54) **LÄNGENAUSGLEICHSELEMENT FÜR EINEN STROMSCHIENENVERBUND, STROMSCHIENENVERBUND UND VERFAHREN ZUM HERSTELLEN EINES STROMSCHIENENVERBUNDS**

(71) Anmelder: Lisa Dräxlmaier GmbH, 84137 Vilsbiburg (DE)
(72) Erfinder: Hammerl, Reinhold, 85748 Garching (DE)

(57) **Zusammenfassung**

Die vorliegende Erfindung betrifft ein Längenausgleichselement (108) für einen Stromschienenverbund (100), wobei zumindest ein Biegebereich (110) des Längenausgleichselements (108) aus zumindest zwei gestapelten, im Wesentlichen gleich geformten, quer zu einer Längenausgleichsrichtung des Längenausgleichselements (108) ausgerichteten, biegsamen Lamellen (112) ausgeführt ist.

## Beschreibung

### Technisches Gebiet

Die vorliegende Erfindung betrifft ein Längenausgleichselement für einen Stromschienenverbund, einen Stromschienenverbund und ein Verfahren zum Herstellen eines Stromschienenverbunds.

### Stand der Technik

Die vorliegende Erfindung wird im Folgenden hauptsächlich in Verbindung mit Übertragungselementen für Fahrzeugbordnetze beschrieben. Die Erfindung kann aber in jeder anderen Anwendung genutzt werden, in welcher elektrische Lasten übertragen werden.

Bei gleicher Temperaturänderung verändern Bauteile aus Materialien mit unterschiedlichen Wärmeausdehnungskoeffizienten ihre Abmessungen unterschiedlich stark. Wenn zwei solche Bauteile an mehreren voneinander beabstandeten Verbindungspunkten mechanisch miteinander verbunden sind, bauen sich durch die Temperaturänderung Zugspannungen beziehungsweise Druckspannungen in den Bauteilen auf. Diese mechanischen Spannungen können Verbindungspunkte zwischen den Bauteilen insbesondere auf Scherung belasten. Eine Baugruppe aus den Bauteilen kann sich auch ähnlich wie Bimetall insgesamt verformen.

Um die unterschiedlichen Wärmeausdehnungen zu kompensieren, können die Verbindungspunkte mit zumindest einem Freiheitsgrad in einer Längenausgleichsrichtung, gestaltet werden, um eine Relativbewegung zwischen den Bauteilen in der Längenausgleichsrichtung zu ermöglichen. Der Freiheitsgrad kann beispielsweise durch in der Längenausgleichsrichtung ausgerichtete Langlöcher erreicht werden.

### Beschreibung der Erfindung

Eine Aufgabe der Erfindung ist es daher, unter Einsatz konstruktiv möglichst einfacher Mittel ein Längenausgleichselement für einen Stromschienenverbund, einen Stromschienenverbund und ein Verfahren zum Herstellen eines Stromschienenverbunds bereitzustellen.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben. Insbesondere können die unabhängigen Ansprüche einer Anspruchskategorie auch analog zu den abhängigen Ansprüchen einer anderen Anspruchskategorie weitergebildet sein.

Es wird ein Längenausgleichselement für einen Stromschienenverbund vorgestellt, wobei zumindest ein Biegebereich des Längenausgleichselements aus zumindest zwei gestapelten, im Wesentlichen gleich geformten, quer zu einer Längenausgleichsrichtung des Längenausgleichselements ausgerichteten, biegsamen Lamellen ausgeführt ist.

Weiterhin wird ein Stromschienenverbund mit zumindest einem Längenausgleichselement gemäß dem hier vorgestellten Ansatz vorgestellt, wobei Stromschienen des Stromschienenverbunds und das Längenausgleichselement bis auf Kontaktbereiche zum Kontaktieren von Komponenten mit einem wärmeleitenden Kunststoffmaterial umspritzt sind, wobei die Lamellen des Längenausgleichselements im Biegebereich freiliegen.

Ferner wird ein Verfahren zum Herstellen eines Stromschienenverbunds gemäß dem hier vorgestellten Ansatz vorgestellt, bei dem die Lamellen des Längenausgleichselements vorpaketiert werden und das Längenausgleichselement im vorpaketierten Zustand mit Stromschienen des Stromschienenverbunds in ein Spritzgusswerkzeug eingelegt wird, in dem zu umspritzende Bereiche der Stromschienen und des Längenausgleichselements mit einem wärmeleitenden Kunststoffmaterial umspritzt werden.

Ein Stromschienenverbund kann aus mehreren Stromschienen bestehen, die entweder direkt miteinander elektrisch leitend verbunden sind oder zwischen denen Komponenten einer den Stromschienenverbund umfassenden elektrischen Schaltung anordenbar sind. Der Stromschienenverbund kann zumindest teilweise durch eine Umhüllung aus elektrisch isolierendem, thermisch leitendem Kunststoffmaterial umhüllt sein. Die Umhüllung verbindet die Stromschienen des Stromschienenverbunds mechanisch miteinander. Dem Kunststoffmaterial kann beispielsweise ein Mengenanteil zumindest eines thermisch leitenden Füllstoffs, wie Aluminiumoxid, hexagonales Bornitrid, Aluminiumnitrid oder auch mehrwandige Kohlenstoff-Nanoröhren (MWNT) beigemengt sein. Der Füllstoff kann hierbei eine höhere Wärmeleitfähigkeit aufweisen als ein Matrixmaterial des Kunststoffmaterials. Die ungefüllten Polymere (Matrixmaterial) liegen üblicherweise zwischen 0,1 bis 0,45 W/mK. Die puren Füllstoffe erreichen Wärmeleitfähigkeitswerte von 40 W/mK bei Aluminiumoxid bis zu 3000 W/mK bei MWNT. Das wärmeleitende Kunststoffmaterial kann beispielsweise eine Wärmeleitfähigkeit von zwei W/mK bis acht W/mK aufweisen. Im Verbund sind Werte um die 8 W/mK erreichbar, insbesondere aufgrund des anisotropen Verhaltens des Verbunds entlang der Orientierungsrichtung des Füllstoffs. In Querrichtung dazu sind wesentlich geringere Werte um die 2 W/mK realistisch. Das Matrixmaterial des Kunststoffmaterials kann ein Polymer, wie Polyamid (PA), Acrylnitril-Butadien-Styrol (ABS), Polycarbonat (PC), Polypropylen (PP), Polybutylenterephthalat (PBT) sein. Die Schaltung kann auch mehrere Stromschienenverbünde in unterschiedlichen Ebenen umfassen. Beispielsweise kann die Schaltung einen ersten Stromschienenverbund für Masse und einen zweiten Stromschienenverbund für ein elektrisches Potenzial gegen Masse umfassen. Eine Komponente kann beispielsweise ein elektronischer oder elektromechanischer Schütz beziehungsweise Schalter sein. Ebenso kann eine Komponente eine Sicherung sein. Komponenten können auch zwischen den zwei Stromschienenverbünden angeordnet werden. Beispielsweise kann ein Kondensator zwischen Masse und dem elektrischen Potenzial angeordnet werden. Innerhalb eines Stromschienenverbunds sind die Stromschienen und das Längenausgleichselement relativ zueinander durch das Kunststoffmaterial fixiert.

Eine Stromschiene kann ein massiver elektrischer Leiter mit einer auslegungsspezifischen Querschnittsfläche sein. Die Querschnittsfläche kann dabei abhängig von einem maximalen Stromfluss sein, für den die Stromschiene ausgelegt ist. Die Stromschiene kann insbesondere eine rechteckige Querschnittsfläche aufweisen. Die Querschnittsfläche kann als Leitungsquerschnitt der Stromschiene bezeichnet werden. Die Stromschiene kann aus einem Blechmaterial ausgeschnitten werden oder von einer Rolle Bandmaterial mit dem erforderlichen Leitungsquerschnitt abgelängt werden. Zumindest an entgegengesetzten Endbereichen kann die Stromschiene Kontaktbereiche zu anderen Stromschienen des Stromschienenverbunds oder zu Komponenten aufweisen.

Lamellen können aus einem dünneren Blechmaterial oder aus einem dünneren Bandmaterial als die Stromschienen hergestellt werden. Eine Dicke der Lamellen ist klein gegenüber einer Breite der Lamellen. Addierte Querschnittsflächen der parallel geschalteten Lamellen können einen größeren oder gleichen Leitungsquerschnitt ergeben, als die zu verbindenden Stromschienen aufweisen. Der Biegebereich kann je nach gewünschtem Biegewiderstand eine anforderungsgerechte Anzahl an Lamellen aufweisen. So kann die Anzahl zumindest zwei betragen, aber auch eine größere Anzahl wie beispielsweise fünf oder mehr Lamellen betragen. Ein kumulierter Biegewiderstand der Lamellen kann wesentlich kleiner sein, als der Biegewiderstand einer Stromschiene. Die Lamellen können im Biegebereich freiliegen. Eine Oberfläche der Lamellen im Biegebereich kann innerhalb eines Winkeltoleranzbereichs orthogonal zur Längenausgleichsrichtung ausgerichtet sein. Auch das Längenausgleichselement kann zumindest an entgegengesetzten Endbereichen Kontaktbereiche zu Stromschienen des Stromschienenverbunds oder zu Komponenten aufweisen.

Das Längenausgleichselement kann an beiden Endbereichen direkt mit den Stromschienen verbunden sein. Alternativ kann das Längenausgleichselement an zumindest einem Endbereich einen Kontaktbereich zu einer anderen Komponente des Stromschienenverbunds aufweisen. Die Komponente kann zwischen dem Längenausgleichselement und der Stromschiene angeordnet werden. Die Komponente kann nach dem Umspritzen mit dem Stromschienenverbund verbunden werden. Die Stromschienen und das Längenausgleichselement können in den Kontaktbereichen Schnittstellen zu den Komponenten aufweisen. Die Schnittstellen können beispielsweise Löcher sein. Im Kunststoffmaterial kann zwischen zumindest zwei freibleibenden Kontaktbereichen eine komponentenspezifische Aufnahmegeometrie der Schnittstelle ausgebildet sein.

Zumindest ein an den Biegebereich angrenzender weiterer Bereich des Längenausgleichselements kann aus den Lamellen ausgeführt sein. Die Lamellen können im weiteren Bereich mechanisch miteinander verbunden sein. Die mechanische Verbindung kann als Vorpaketierung bezeichnet werden. Beispielsweise kann das ganze Längenausgleichselement aus den Lamellen zusammengesetzt sein. Die Lamellen können außerhalb des Biegebereichs stoffschlüssig und/oder formschlüssig miteinander verbunden sein.

Die Lamellen können zum Vorpaketieren außerhalb des Biegebereichs mit dem wärmeleitenden Kunststoffmaterial umspritzt werden. Mit anderen Worten können die Lamellen außerhalb des Biegebereichs mit einem wärmeleitenden Kunststoffmaterial umspritzt und/oder teilumspritzt sein. Die Lamellen können zusammen in ein Spritzgusswerkzeug eingelegt werden und zumindest teilweise von dem Kunststoffmaterial umhüllt werden. Beispielsweise kann zumindest eine Banderole aus dem Kunststoffmaterial um die gestapelten Lamellen herum gespritzt werden. Das Kunststoffmaterial kann dem Kunststoffmaterial entsprechen, mit dem der Stromschienenverbund umhüllt wird. Dadurch kann die Vorpaketierung des Längenausgleichselements nahtlos in der Umspritzung des Stromschienenverbunds aufgehen.

Die Lamellen können jeweils zwischen 0,5 Millimeter und 0,8 Millimeter dick sein. Die Lamellen können aus dünnem Blech bestehen. Die Lamellen können beispielsweise aus Aluminium oder Kupfer bestehen. Die Lamellen weisen vorzugsweise eine ausreichende Eigensteifigkeit auf, sodass das Längenausgleichselement maschinell verarbeitet werden kann, ohne dass es seine Form verliert.

Zumindest ein Endbereich des Längenausgleichselements kann in der Längenausgleichsrichtung ausgerichtet sein. Die Längenausgleichsrichtung kann einer Haupterstreckungsrichtung der benachbarten Stromschienen entsprechen. Der Endbereich kann so flächig mit den Stromschienen verbunden werden. Ebenso kann im so ausgerichteten Endbereich ein Kontaktbereich zu einer Komponente platzsparend angeordnet sein.

Das Längenausgleichselement kann mit zumindest einer der Stromschienen mechanisch verbunden sein. Durch die mechanische Verbindung können die Stromschiene und das Längenausgleichelement gemeinsam in das Spritzgusswerkzeug eingelegt werden. Ein Bestücken des Spritzgusswerkzeugs kann so schnell erfolgen.

Die Lamellen des Längenausgleichselements können vor einem Verbinden mit den Stromschienen vorpaketiert werden und im vorpaketierten Zustand mit den Stromschienen verbunden werden. Die zu umspritzenden Bereiche der Stromschienen und des Längenausgleichselements können nach dem Verbinden mit dem wärmeleitenden Kunststoffmaterial umspritzt werden. Die vorpaketierten Lamellen können einfach ausgerichtet werden, da sie nicht auseinander fallen können.

Der Stromschienenverbund kann vor einem Umspritzen auf eine Mitteltemperatur eines Arbeitstemperaturbereichs des Stromschienenverbunds temperiert werden. Der Arbeitstemperaturbereich des Stromschienenverbunds kann aufgrund der zu übertragenden elektrischen Lasten sehr groß sein. Ein Fahrzeug kann in arktischer Kälte von beispielsweise unter -20°C und Wüstenhitze von beispielsweise über 40°C betrieben werden. Eine Erwärmung durch die übertragene Leistung kann zum Arbeitstemperaturbereich hinzu addiert werden. Die Mitteltemperatur kann ein Mittelwert der niedrigst anzunehmenden Temperatur und der höchst anzunehmenden Temperatur des Arbeitstemperaturbereichs sein. Die Mitteltemperatur kann beispielsweise höher als Raumtemperatur sein. Durch das Vortemperieren können thermische Spannungen im Stromschienenverbund ausgemittelt werden.

### Kurze Figurenbeschreibung

Nachfolgend wird ein vorteilhaftes Ausführungsbeispiel der Erfindung unter Bezugnahme auf die begleitenden Figuren erläutert. Es zeigen:
Fig. 1 eine räumliche Darstellung eines umspritzten Stromschienenverbunds gemäß einem Ausführungsbeispiel; und
Fig. 2 eine räumliche Darstellung eines Längenausgleichselements gemäß einem Ausführungsbeispiel.

Die Figuren sind lediglich schematische Darstellungen und dienen nur der Erläuterung der Erfindung. Gleiche oder gleichwirkende Elemente sind durchgängig mit den gleichen Bezugszeichen versehen.

### Detaillierte Beschreibung

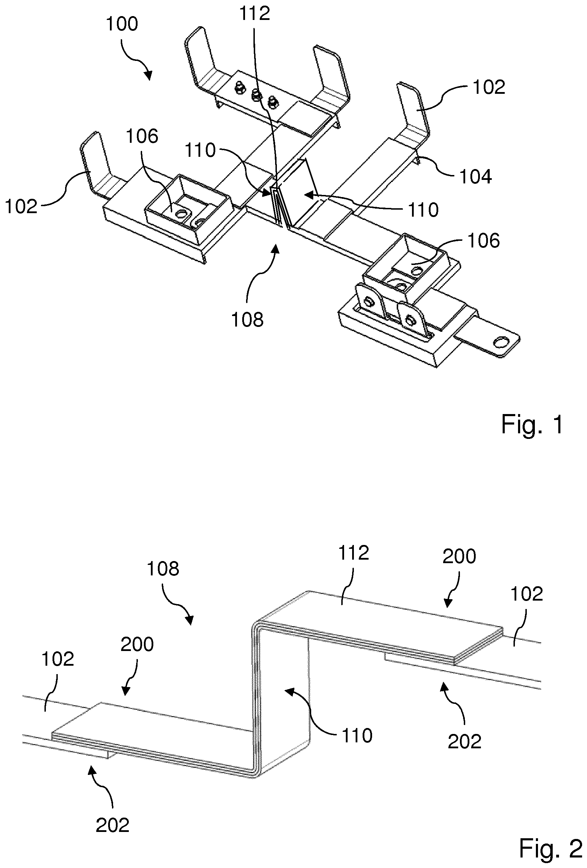

Fig. 1 zeigt eine räumliche Darstellung eines umspritzten Stromschienenverbunds 100 gemäß einem Ausführungsbeispiel. Der Stromschienenverbund 100 besteht dabei aus mehreren Stromschienen 102, die in weiten Bereichen mit einer Umhüllung 104 aus einem thermisch leitenden Kunststoffmaterial umspritzt sind. Dabei sind Kontaktbereiche 106 zum Kontaktieren von elektrischen Komponenten von der Umhüllung 104 ausgespart.

Die Stromschienen 102 sind mehrheitlich in einer Ebene angeordnet, um auf einer gemeinsamen Kühlplatte angeordnet werden zu können. In der Ebene sind die Stromschienen in unterschiedliche Richtungen orientiert und enden in nicht umhüllten Endbereichen. Wo die Stromschienen 102 miteinander verbunden sind, überlappen sie einander zumindest teilweise. Mehrere der Endbereiche sind quer zu einer der Ebene aufgebogen und bilden Anschlussbereiche für die im Gehäuse montierten Schnittstellen zum Bordnetz aus.

Der Stromschienenverbund 100 umfasst ferner ein Längenausgleichselement 108. Das Längenausgleichselement 108 verbindet hier zwei in gleicher Richtung ausgerichtete Stromschienen 102 des Stromschienenverbunds 100 mechanisch und elektrisch miteinander. Das Längenausgleichselement 108 ist dazu ausgebildet, Längenveränderungen des Stromschienenverbunds 100 in einer Längenausgleichsrichtung auszugleichen. Die Längenausgleichsrichtung entspricht hier einer Ausrichtung der verbundenen Stromschienen 102. Zum Ausgleichen der Längenveränderungen weist das Längenausgleichselement 108 zumindest einen Biegebereich 110 auf, der quer zu der Längenausgleichsrichtung ausgerichtet ist. Der Biegebereich 110 ist aus mehreren aufeinander gestapelten Lamellen 112 zusammengesetzt. Zusammen weisen die Lamellen zumindest den gleichen Leitungsquerschnitt auf, wie die angrenzenden Stromschienen 102. Die Lamellen 112 sind biegsamer, als es eine massive Stromschiene 102 gleicher Dicke wäre. Der Biegebereich 110 ist nicht von dem Kunststoffmaterial umhüllt, um seine Biegsamkeit zu erhalten.

Hier weist das Längenausgleichselement 108 zwei unmittelbar aneinander angrenzende Biegebereiche 110 mit durchgehenden Lamellen 112 auf. Beide Biegebereiche 110 sind im Wesentlichen quer zu der Längenausgleichsrichtung ausgerichtet. Die Lamellen 112 sind alle im Wesentlichen gleichartig geformt und vertikal übereinander gestapelt. Die Biegebereiche 110 sind um einen Winkel geringfügig kleiner als 90° gegenüber den angrenzenden Stromschienen 102 aufgebogen. Zwischen den Biegebereichen 110 sind die Lamellen 112 um einen Winkel geringfügig kleiner als 180° umgebogen. Durch die stumpfen Winkel weisen die Biegebereiche 110 eine V-Form zueinander auf. Ein Abstand zwischen den offenen Seiten des Vs bestimmt dabei eine mögliche Längenausgleichsdistanz, also um wieviel der Stromschienenverbund 100 sich ausdehnen kann, bevor die Biegebereiche 110 einander berühren.

In einem Ausführungsbeispiel ist das Längenausgleichselement 108 trapezförmig. Die Biegebereiche 110 können dann beispielsweise wie eine Brücke über eine darunter liegende Stromschiene des jeweils anderen Verbunds (Plus oder Masse) hinwegführen und gleichzeitig als Dehnungsausgleich fungieren.

Mit anderen Worten wird eine Methode zur Fertigung von Schienenverbunden als Vormontage-Baugruppe vorgestellt. Dabei bestehen die Einzelschienen aus einfachen Rechteckprofilen. Die Verbindung der Schienen erfolgt durch geeignete Fügeverfahren wie beispielsweise thermisches Fügen oder Durchsetzfügen. Für den Fügeprozess können Kupferpins verwendet werden, die gleichzeitig als Positionsführungen dienen können. Der Schienenverbund wird als Verbund mit wärmeleitendem, elektrisch isolierendem Kunststoff umspritzt. Während des Umspritzens kann der Schienenverbund temperiert werden, um das Bezugsniveau der durch Wärmeausdehnung entstehenden Spannungen zwischen Kunststoff und Schienen beeinflussen zu können. der umhüllende Kunststoff weist einen annähernd gleichen Wärmeausdehnungskoeffizienten auf, wie das Schienenmaterial. Beispielsweise kann PA6 mit Al₂O₃ gefüllt verwendet werden.

Durch unterschiedliche Wärmeausdehnung auftretende Spannungen werden durch eingebrachte Ausgleichselemente aufgenommen. Dabei kann es sich um flexible Geflechtstücke handeln, die zwischen Schienenteilen einfügt sind. Alternativ können Schienenteile verwendet werden, die nicht massiv, sondern lamelliert ausgeführt und damit flexibel sind. Der kunststoffumspritzte Schienenverbund liegt großflächig auf einer von einem Fluid durchströmten Kühlplatte zur aktiven Kühlung auf. Durch den wärmeleitenden Kunststoff wird eine leistungsfähige Kühlung der Schienenverbunde realisiert.

Fig. 2 zeigt eine räumliche Darstellung eines Längenausgleichselements 108 gemäß einem Ausführungsbeispiel. Das Längenausgleichselement 108 entspricht im Wesentlichen dem Längenausgleichselement in Fig. 1. Im Gegensatz dazu verbindet das Längenausgleichselement 108 hier zwei Stromschienen 102, die in unterschiedlichen Ebenen angeordnet sind. Die Ebenen weisen zueinander einen Höhenversatz auf. Der Höhenversatz entspricht dabei im Wesentlichen einer Länge des Biegebereichs 110.

Das Längenausgleichselement 108 weist hier drei übereinander gestapelte, im Wesentlichen gleich geformte Lamellen 112 auf. Die Lamellen 112 erstrecken sich über die volle Länge des Längenausgleichselements 108. Endbereiche 200 des Längenausgleichselements 108 überlappen Endbereiche 202 der Stromschienen 102.

Das Längenausgleichselement 108 ist hier stufenförmig gebogen. Der Biegebereich 110 zwischen den Endbereichen 200 ist in entspanntem Zustand orthogonal zu den Endbereichen ausgerichtet. Je nachdem, ob das Längenausgleichselement auf Zug oder Druck beansprucht wird, verändert sich die Form des Biegebereichs 110.

Mit anderen Worten zeigt Fig. 2 einen lamellierten Schienenteil in isometrischer Ansicht.

Da es sich bei der vorhergehend detailliert beschriebenen Vorrichtungen und Verfahren um Ausführungsbeispiele handelt, können sie in üblicher Weise vom Fachmann in einem weiten Umfang modifiziert werden, ohne den Bereich der Erfindung zu verlassen. Insbesondere sind die mechanischen Anordnungen und die Größenverhältnisse der einzelnen Elemente zueinander lediglich beispielhaft gewählt.

### BEZUGSZEICHENLISTE

- 100: Stromschienenverbund
- 102: Stromschiene
- 104: Umhüllung
- 106: Kontaktbereich
- 108: Längenausgleichselement
- 110: Biegebereich
- 112: Lamelle
- 200: Endbereich
- 202: Endbereich

## Patentansprüche

1. Längenausgleichselement (108) für einen Stromschienenverbund (100), wobei zumindest ein Biegebereich (110) des Längenausgleichselements (108) aus zumindest zwei gestapelten, im Wesentlichen gleich geformten, quer zu einer Längenausgleichsrichtung des Längenausgleichselements (108) ausgerichteten, biegsamen Lamellen (112) ausgeführt ist.

2. Längenausgleichselement (108) gemäß Anspruch 1, bei dem ferner zumindest ein an den Biegebereich (110) angrenzender weiterer Bereich des Längenausgleichselements (108) aus den Lamellen (112) ausgeführt ist, wobei die Lamellen (112) im weiteren Bereich mechanisch miteinander verbunden sind.

3. Längenausgleichselement (108) gemäß Anspruch 2, bei dem die Lamellen (112) außerhalb des Biegebereichs (110) mit einem wärmeleitenden Kunststoffmaterial (teil)umspritzt sind.

4. Längenausgleichselement (108) gemäß einem der vorhergehenden Ansprüche, bei dem die Lamellen (112) je zwischen 0,5 Millimeter und 0,8 Millimeter dick sind.

5. Längenausgleichselement (108) gemäß einem der vorhergehenden Ansprüche, bei dem zumindest ein Endbereich (200) des Längenausgleichselements (108) in der Längenausgleichsrichtung ausgerichtet ist.

6. Stromschienenverbund (100) mit zumindest einem Längenausgleichselement (108) gemäß einem der Ansprüche 1 bis 5, wobei Stromschienen (102) des Stromschienenverbunds (100) und das Längenausgleichselement (108) bis auf Kontaktbereiche (106) zum Kontaktieren von Komponenten mit einem wärmeleitenden Kunststoffmaterial umspritzt sind, wobei die Lamellen (112) des Längenausgleichselements (108) im Biegebereich (110) freiliegen.

7. Stromschienenverbund (100) gemäß Anspruch 6, bei dem das Längenausgleichselement (108) mit zumindest einer der Stromschienen (102) mechanisch verbunden ist.

8. Verfahren zum Herstellen eines Stromschienenverbunds (100) gemäß einem der Ansprüche 6 bis 7, bei dem die Lamellen (112) des Längenausgleichselements (108) vorpaketiert werden und das Längenausgleichselement (108) im vorpaketierten Zustand mit Stromschienen (102) des Stromschienenverbunds (100) in ein Spritzgusswerkzeug eingelegt wird, in dem zu umspritzende Bereiche der Stromschienen (102) und des Längenausgleichselements (108) mit einem wärmeleitenden Kunststoffmaterial umspritzt werden.

9. Verfahren gemäß Anspruch 8, bei dem die Lamellen (112) zum Vorpaketieren außerhalb des Biegebereichs (110) mit dem wärmeleitenden Kunststoffmaterial umspritzt werden.

10. Verfahren gemäß einem der vorhergehenden Ansprüche, bei dem der Stromschienenverbund (100) vor einem Umspritzen auf eine Mitteltemperatur eines Arbeitstemperaturbereichs des Stromschienenverbunds (100) temperiert wird.
